# EUROPEAN PATENT SPECIFICATION

(11) **EP 2 780 588 B1**
(45) Date of publication and mention of the grant of the patent: **07.09.2016**
(21) Application number: 12850438.8
(22) Date of filing: 13.11.2012
(51) Int. Cl.: B63B 35/44, F03D 1/02, F03D 80/00

(54) **A WIND POWER PLANT FOR CONVERTING WIND ENERGY TO ELECTRICAL ENERGY AT SEA**
WINDKRAFTANLAGE ZUR UMWANDLUNG VON WINDENERGIE IN ELEKTRISCHE ENERGIE AUF SEE
CENTRALE ÉOLIENNE POUR CONVERTIR L'ÉNERGIE ÉOLIENNE EN ÉNERGIE ÉLECTRIQUE EN MER

(30) Priority: 15.11.2011 SE 1151082
(43) Date of publication of application: 24.09.2014
(73) Proprietor: Flowocean AB, 721 30 Västerås (SE)
(72) Inventor: MORITZ, Bertil, SE-723 48 Västeras (SE)
(74) Representative: Eurenius, Karin Lisa Maria
(86) International application number: PCT/SE2012/051249
(87) International publication number: WO 2013/074027

(56) References cited:
- WO-A1-99/02856
- WO-A1-2009/123551
- WO-A1-2010/021585
- WO-A1-2010/047651
- WO-A1-2010/093253
- WO-A2-2009/004420
- SE-C2- 532 886
- US-A- 4 735 552
- US-A1- 2009 091 136

## Description

### FIELD OF THE INVENTION AND PRIOR ART

The present invention refers to a wind power plant designed to convert wind energy at sea to electrical energy, comprising a plurality of wind turbines, a floatable framework including support elements adapted to support the wind turbines, and an arrangement for connecting the framework to a fundament in the sea.

Such a wind power plant is, for example, known from US 2011037272. The wind power plant includes a plurality of wind turbines and a floating framework including two essentially vertical support elements and an essentially horizontal support element connected to the vertical support elements. The turbines are attached to the vertical support elements. The wind power plant further comprises an arrangement for connecting the framework to a fundament in the form of a post arranged in the sea, which includes two rods and a plurality of wires arranged between the post and the support elements.

Another example of a floating wind power plant is disclosed in EP 2324244. The plant includes a beam structure arranged to form a frame structure and at least one upright for stabilizing the frame structure position in the body of water. This plant is supposed to be attached to a buoy.

A disadvantage with the prior art wind power plants is that the arrangement for connecting the framework to the fundament are bulky and heavy. Another disadvantage is the risk for obtaining resonance problem. A problem with the prior art wind power plants is that they are not suitable to locate in shallow water due to the fact that the power cable between the plant and the bottom of the sea does not have enough space to move and accordingly the cable will be subjected to large strains.

### OBJECTS AND SUMMARY OF THE INVENTION

The object of the present invention is to provide an improved wind power plant suitable for converting wind energy to electrical energy at sea, which alleviates the above mentioned problems.

According to the invention, this object is achieved by a wind power plant as defined in claim 1.

Such a wind power plant is characterized in that the arrangement for connecting the framework to the fundament comprises an elongated beam extending through an opening in the frame work and protruding on both sides of the frame work, a connection unit for connecting one end of the beam to the fundament, and a plurality of wire cables arranged between the beam and the frame work in order to mechanically connect the beam to the frame work. Preferably, the wire cables are made of stainless steel.

The wire arrangement includes at least six wire cables wherein at least three of the wire cables are arranged between one end of the beam and the framework, and at least three of the wire cables are arranged between the opposite end of the beam and the framework. Such an arrangement keeps the beam in a fixed position relative the framework in both horizontal and vertical directions.

The arrangement with the support beam and the wire cables at both ends of the beam provides a flexible connection between the fundament and the framework and reduces the dynamic stress on the framework.

Due to the arrangement with the wires cables, the utilization of material is optimized and accordingly the weight of the arrangement is reduced compared to the prior art arrangements. The reduced weight of the wind power plant also results in a reduced cost of manufacturing the wind power plant in comparison to prior art in comparison prior art wind power plants. Resonance problems are also reduced due to the characteristics of the wire cables.

According to one embodiment of the invention, the connection between the beam and the frame work is established exclusively by means of said plurality of wire cables.

According to one embodiment of the invention, the elongated beam is arranged extending through said opening in the frame work so that elongated beam is spaced apart from the frame work and so that the elongated beam protrudes on both sides of the frame work.

According to an embodiment of the invention, the wire arrangement includes at least eight wire cables, wherein at lest four of the wire cables are arranged between one end of the beam and the framework and at least four of the wire cables are arranged between the opposite end of the beam and the framework. This embodiment provides a robust arrangement connecting the framework to the fundament. Having eight wire cables distributes the forces better so that stresses and material is reduced.

According to an embodiment of the invention, the support elements form a plane and the beam is arranged angular with respect to the plane. Preferably, the angle between the beam and the plane is within the interval of 80° - 30°. This embodiment enables the beam to be connected to the fundament beneath the surface of the water and close to the bottom of the sea while the turbines and the support elements are upright. It is advantageous to have the connection point between the plant and the fundament close to the seabed since the bending moment and stress on the fundament, will be dramatically reduced.

According to an embodiment of the invention, the wire cables are arranged so that the lengths of the wire cables are adjustable to enable adjustment of the angle between the beam and the plane formed by the support elements. The angle needed between the beam and the plan formed by the support elements depends on the depth of the sea at the location of the plant. This embodiment makes it possible to adapt the angle between the beam and the plane formed by the support elements to different water depths, still getting the end of the beam close to level of the sea bottom while the support elements are vertical. Further, this embodiment offers a better possibility to launch the structure at shipyard by gradually change the angle to erect the structure in water. This embodiment also offers a possibility to eliminate the rear buoyancy element and to lean the structure forward towards the front buoyancy element.

According to an embodiment of the invention, said arrangement comprises connection elements for connecting said wire cables to the frame work and to the beam, and said connection elements are arranged to enable adjustment of the lengths of the wire cables. By utilizing adjustable connections of the wire cables to the frame work is possible to change the angle between the beam and the frame work.

According to an embodiment of the invention, the two support elements are arranged at a distance from each other, and the framework includes a lattice structure connected to the support elements in order to guy the support elements. For example, the two support elements are diagonally braced. By utilization of a lattice structure and wire cables, the flexural stress in the support elements are significantly reduced compared to traditional land-based wind power plants. The support elements are for example tube shaped, which makes them floatable.

According to an embodiment of the invention, the elongated beam extends through the opening so that it is spaced apart from the two support elements and from the pontoon unit. Accordingly, there is no direct attachment between the elongated beam and the support elements or the pontoon unit.

According to an embodiment of the invention, the elongated beam is connected to the framework exclusively by means cables. The connection by means cables between the elongated beam and the framework has the advantage of reducing the weight of the wind power plant.

### BRIEF DESCRIPTION OF THE DRAWINGS

The invention will now be explained more closely by the description of different embodiments of the invention and with reference to the appended figures.
- Fig. 1: shows a perspective view of a wind power plant according to a first embodiment of the invention.
- Fig. 2: shows a side view of the wind power plant shown in figure 1, when the wind power plant is in a transportation position.
- Fig. 3: shows a side view of the wind power plant shown in figure 1, when the wind power plant is connected to a fundament in the sea and ready for operation.
- Fig. 4: shows a rear view of the wind power plant shown in figure 1.
- Fig. 5: shows a rear view of a wind power plant according to a second embodiment of the invention.
- Fig. 6: shows an example of a connection element for connecting wire cables to a frame work and a beam of the wind power plant.

### DETAILED DESCRIPTION OF PREFERRED EMBODIMENTS OF THE INVENTION

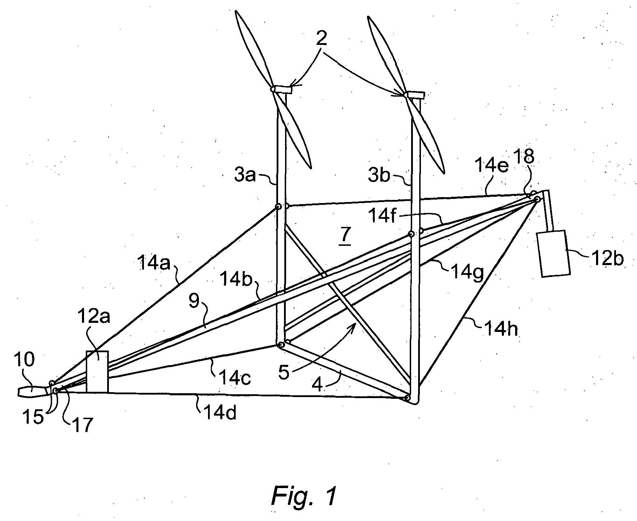

Figures 1 - 4 shows a wind power plant adapted for converting wind energy to electrical energy at sea according to a first embodiment of the invention. The wind power plant includes a plurality of wind turbines 2. In this embodiment the wind power plant includes two wind turbines 2. However, in another embodiment of the invention, the wind power plant may include three or more wind turbines. The wind power plant further includes a floating framework including at least two support elements 3a, 3b adapted to support the wind turbines 2. The support elements are elongated. In this embodiment, the support elements are two hollow tubes arranged in parallel and at a distance from each other so that an opening 7 is formed between the support elements. The wind turbines 2 are mechanically connected to upper ends of the support elements. The wind power plant is designed so that the support elements 3-b are vertically arranged when the plant is in operation.

The framework further includes an elongated pontoon unit 4 arranged between the support elements 3a-b. The pontoon unit 4 is also tube shaped. The pontoon unit 4 is mechanically connected to lower ends of the support elements. In another embodiment it is possible to have three or more support elements to support three or more wind turbines. For example, the support elements 3a-b and the pontoon 4 are made by tubes. The tubes contribute to a certain floating power and stabilizing in roll direction.

The framework further includes a lattice structure, e.g. a diagonal brace 5 connected to the support elements 3a-b in order to guy the support elements. It is advantageous to use a diagonal brace to stabilize the support elements and to reduce the flexural stress in the framework. Of course, it is possible to use other type of arrangement to guy the support elements.

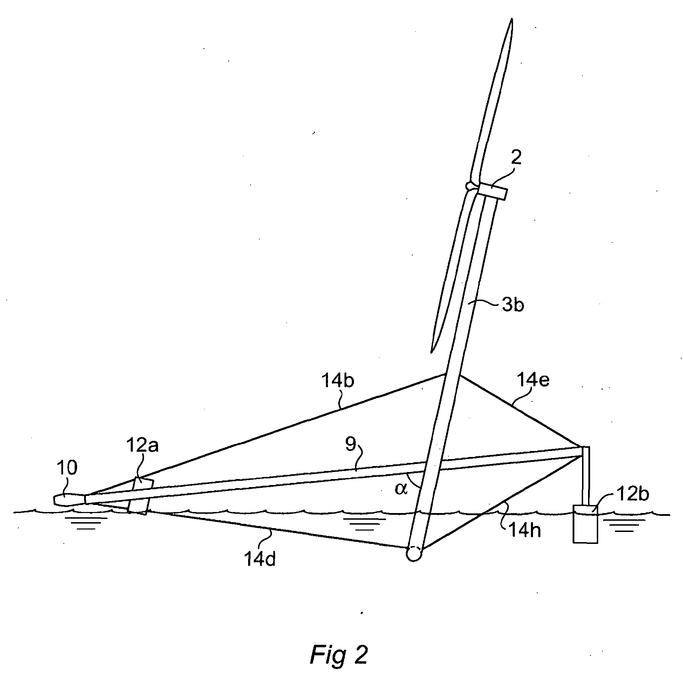

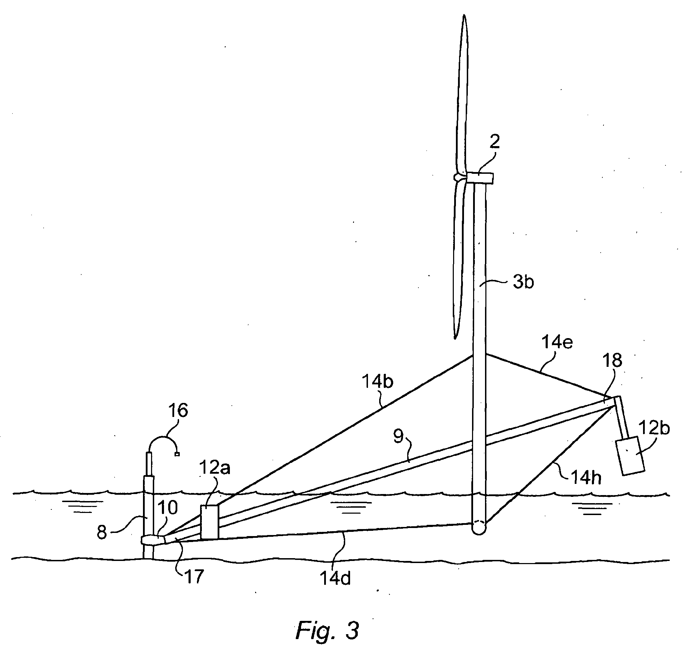

The wind power plant further includes an arrangement for connecting the framework to a fundament arranged in the sea in order to keep the wind power plat at a fixed position in the sea. The fundament is, for example, a buoy, a pole/post or submarine tower. In this example, the fundament, is a pole 8 The pole 8 is anchored in the bottom of the sea, as shown in figure 3. This arrangement comprises an elongated beam 9, preferably made of stainless steel or aluminium. For example, the beam can be solid, tube-shaped or a lattice structure. The elongated beam 9, in the following named support beam, is arranged so that it extends through the opening 7 between the support elements 3a-b and protrudes on both sides of the framework as shown in figure 2 and 3. The support elements 3a-b and the pontoon 4 form a plane. The beam 9 is arranged angular with respect to the plane. The support beam is neither perpendicular to the plane nor parallel with the plane. Preferably, the beam is arranged with an angle α relative the plane which is within the interval of 30° - 80°, depending on water depth.

One end of the beam 9 is provided with a connection unit 10 for connecting the beam 9 to the pole 8. The connection unit 10 is designed so that it is possible to move the connection unit in a vertical direction relative the pole, but not in a horizontal direction. Each end of the beam 9 is provided with a buoyancy element 12a, 12b, which also can be used as weight elements. A first end 17 of the beam 9 is provided with a front buoyancy element 12a and a second end 18 of the beam 9 is provided with a rear buoyancy element 12b. At least the front buoyancy element 12a is hollow and includes a space with an inlet adapted to receive air and water, and the plant includes means for controlling the level of water in the space to allow a user to change the relation between air and water in the space in order to change the floating power of the buoyancy element. In a preferred embodiment of the invention, the rear buoyancy element 12a also includes a space including an inlet adapted to receive air and water, and the plant includes means, for instance a valve, for controlling the level of water in the space to allow a user to change the relation between air and water in the space in order to change the floating power of the buoyancy element. It is advantageous to fill the buoyancy elements with water after the plant has been installed at site. This means that mass is supplied to the plant which reduces movements of the water. It is more efficient to add mass at a position farther away from the connection point to the fundament, than at a position closer to the connection point.

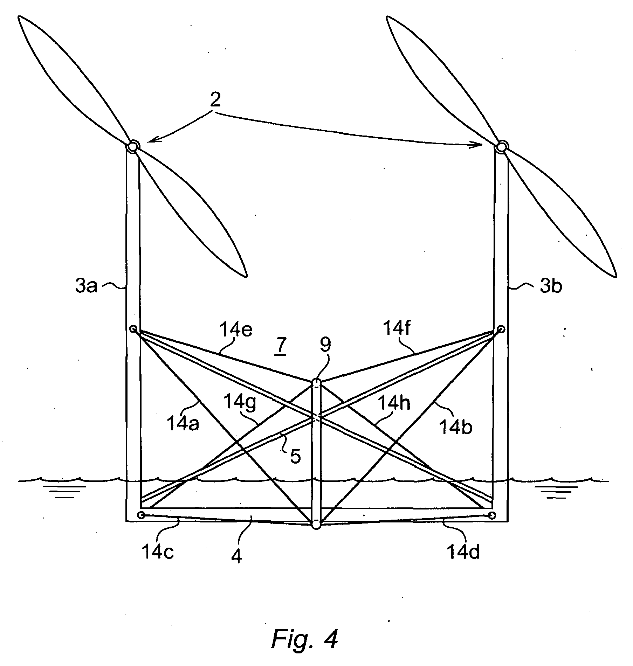

The wind power plant further comprises a plurality of wire cables 14a-h, preferably made of steel or polyester arranged between the support beam 9 and the framework in order to mechanically connect the beam to the framework. The beam 9 and the support elements are provided with a plurality of cable attachments 15 for facilitating the attachment of the wire cables. The cable attachment is, for example, a loop or a ring. The ends of the cable wire are also provided with corresponding attachments, for example hooks. The arrangement with wire cables achieves an optimal utilization of material and accordingly reduces the weight of the power plant. The attachment of wires to the framework can also be adjustable, e.g. wire 14a and wire 14e can be one continuous wire and 14b and 14f can be one continuous wire, as shown in figure 4. The connection to the framework can be a clamping device inside the support elements 3a-b, keeping the relative position of wire connection point and the tube 3 in a wanted position.

In the embodiment shown in figure 1 - 4, eight wire cables are arranged between the beam and the framework. Four of the wire cables 14a-d are arranged between the framework and the end of the beam, which includes the connection unit 10, and four of the wire cables 14e-h are arranged between the framework and the opposite end of the beam. In this embodiment, cable wires 14a and 14c are connected between a first end 17 of the beam and the support element 3a, cable wires 14b and 14d are connected between the first end 17 of the beam and the support element 3b. Cable wires 14e and 14g are connected between a second end 18 of the beam and the support element 3a, cable wires 14f and 14h are connected between the second end 18 of the beam and the support element 3b. As seen from figures 1 and 4, the support beam 9 is free from the framework, i.e. is not in contact with the framework, and is only connected to the framework through the wire cables 14a-h. Since the support beam 9 has no connection to the framework except through the wire cables 14a-h no forces are introduced between the beam 9 and the framework.

Figure 2 shows the wind plant in a transportation position, in which it is possible to take the plant in tow. The wind power plant is transported to the pole 8 by boat. During transportation of the wind power plant, the buoyancy elements 12a-b are filled with air to keep the wind power plant floating during transportation. By changing the relation between water and air in the front buoyancy element 12a, it is possible to rise and lower the front part of the wind power plant.

When the wind power plant has reached the pole 8, the connection unit 10 is connected to the upper part of the pole 8. When the power plant has been connected to the pole 8, the front buoyancy element 12a is filled with water so that the wind power plant is tilted forward, as shown in figure 3. The front end 17 of the beam 9 including the connection unit 10 sinks until they reach a stop position close to the bottom of the pole 8. In this position the buoyancy element 12a-b are not effected by unfavourable movements of the framework due to wave movements in the water. The framework 3a-b, 4 and the beam 9 are designed so that the support elements 3a-b are essentially vertical and the plane of the turbines are parallel with the vertical plane when the plant is anchored. Due to the fact that the anchoring point is close to the bottom of the sea, bending stresses on the pole 8 is significantly reduced, and therefore the pole only has to be dimensioned mainly for sheer forces with small bending movement.

A power cable 16 is positioned on the bottom of the sea and extends through the pole 8. The power cable 16 is connected to the wind power plant above the surface of the water after the connection to the pole. An advantage with this is that the power cable 16 does not move in the water due to movements of the framework, as compared to the solution when the beam 9 is connected to a buoy.

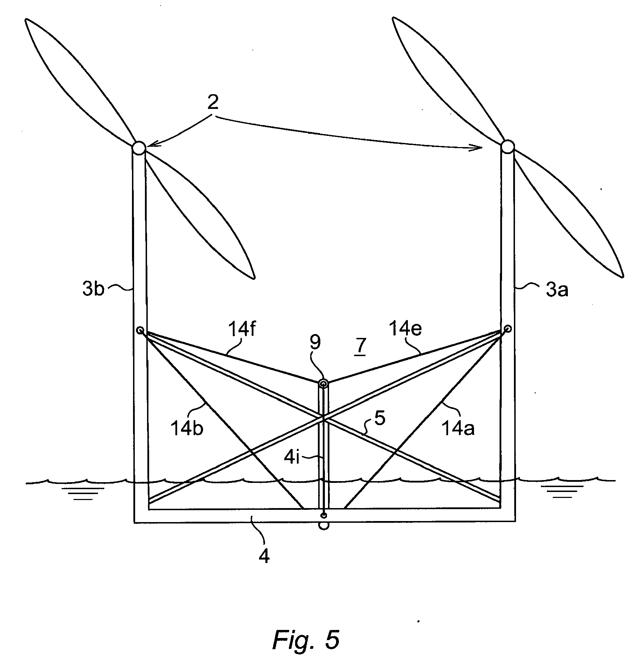

Figure 5 shows a rear view of a wind power plant according to a second embodiment of the invention. This embodiment differs from the first embodiment in that the wire arrangement only has six wire cables, instead of eight as in the first embodiment. The wire cables 14c and 14d have been exchanged by a single wire cable 14i. In the same way, the wire cables 14g and 14h have been exchanged by a single wire cable (not shown).

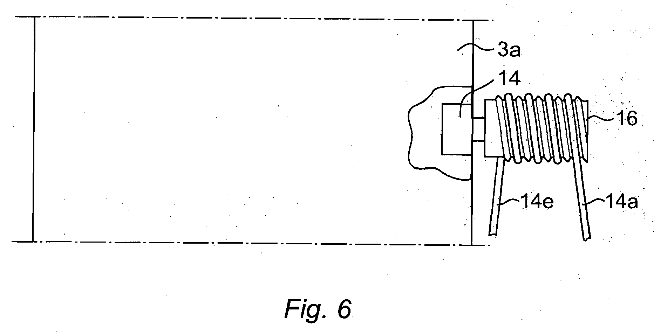

Figure 6 shows an example of a connection element 16 for connecting the wire cables 14a-i to the frame work and to the beam, which connection element makes it possible to adjust the lengths of the wire cables on both sides of the framework to enable adjustment of the angle α between the beam 9 and the plane formed by the support elements. The connection element 6 includes a bobbin rotatably arranged relative the support element. The wires 14e and 14a are parts of one wire which are winded on the bobbin 16. The lengths of the parts 14e and 14a will change upon rotation of the bobbin such that when wire part 14a is lengthen, wire part 14e is shorten and vice versa. For example, the rotation of the bobbin is drive by a motor. In this example, a motor 14 is arranged inside the hollow support element 3a. If such connection elements 16 is used in the embodiment shown in figure 1, the framework is provided with four bobbins, a first for wires 14a and 14e, a second for wires 14b and 14f, a third for wires 14c and 14g, and a fourth for wires 14d and 14h.

This wind power plant is large, for example, the length of the beam is about 150m. The part of the beam extending in a direction towards the pole 8 is, for example, about 100m and the part of the beam extending in the opposite direction is, for example, about 50m.

An advantage with the power plant according to the present invention is that it is possible to position in shallow water. Another advantage compared to the prior art power plants is that the wind turbines only has one support element to the centre of a rotor of the wind turbine. This arrangement reduces disturbances and problems with dynamic dimensioning of the framework.

The present invention is not limited to the embodiments disclosed but may be varied and modified within the scope of the following claims. For example, the plant may include more than two support elements and more than two wind turbines.

## Claims

1. A wind power plant for converting wind energy to electrical energy at sea, comprising:
- a plurality of wind turbines (2),
- a floatable frame work including at least two support elements (3a-b) adapted to support the wind turbines and arranged so that an opening (7) is formed between the support elements, and
- an arrangement for connecting the frame work to a fundament arranged in the sea, said arrangement comprises:
- an elongated beam (9) extending through said opening in the frame work and protruding on both sides of the frame work,
- a connection unit (10) for connecting one end of the beam to the fundament, and
- a plurality of wire cables (14a-i) arranged between said beam and said frame work in order to mechanically connect the beam to the frame work,
wherein at least three of said wire cables (14 a-d) are arranged between one end of the beam and the frame work and at least three (14 e-h) of said wire cables are arranged between the opposite end of the beam and the frame work.

2. The wind power plant according to claim 1, wherein the connection between the beam and the frame work is established exclusively by means of said plurality of wire cables (14a-i).

3. The wind power plant according to claim 1 or 2, wherein the elongated beam (9) is arranged extending through said opening in the frame work so that elongated, beam (9) is spaced apart from the frame work and so that the elongated beam (9) protrudes on both sides of the frame work.

4. The wind power plant according any of the previous claims, wherein at least four of said wire cables are arranged between one end of the beam and the frame work and at least four of said wire cables are arranged between the opposite end of the beam and the frame work.

5. The wind power plant according to any of the previous claims, wherein said support elements (3a-b) form a plane and said beam (9) is arranged angular with respect to said plane.

6. The wind power plant according to claim 5, wherein the angle (α) between said beam and said plane is within the interval of 30° - 80°, preferably 50°-70°.

7. The wind power plant according to any of claim 4 and 5, wherein said wire cables are arranged so that the lengths of the wire cables are adjustable to enable adjustment of the angle (α) between said beam (9) and said plane formed by the support elements.

8. The wind power plant according to claim 7, wherein said arrangement comprises connection elements (16) for connecting said wire cables (14a-i) to the frame work and to the beam, and said connection elements are arranged to enable adjustment of the lengths of the wire cables.

9. The wind power plant according to any of the previous claims, wherein said frame work includes an elongated pontoon (4) unit arranged between said support elements (3a-b).

10. The wind power plant according to any of the previous claims, wherein the two support elements (3a-b) are arranged at a distance from each other, and the framework includes a lattice structure connected to the support elements (3a-b) in order to guy the support elements.

11. The wind power plant according to any of the previous claims, wherein said two support elements (3a-b) are tube shaped.

## Patentansprüche

1. Windkraftanlage zur Umwandlung von Windenergie in elektrische Energie auf See, umfassend:
- mehrere Windturbinen (2),
- einen schwimmfähigen Rahmen, der wenigstens zwei Stützelemente (3a - b) aufweist, die in der Lage sind, die Windturbinen zu tragen, und die so angeordnet sind, daß zwischen den Stützelementen eine Öffnung (7) gebildet wird, und
- eine Anordnung zum Verbinden des Rahmens mit einem in der See angeordneten Fundament, wobei diese Anordnung folgendes umfaßt:
einen länglichen Träger (9), der sich durch die Öffnung in dem Rahmen hindurch erstreckt und auf beiden Seiten des Rahmens herausragt,
eine Verbindungseinheit (10) zum Verbinden des einen Endes des Trägers mit dem Fundament, und
mehrere Drahtkabel (14a - i), die zwischen dem Träger und dem Rahmen angeordnet sind, um den Träger mechanisch mit dem Rahmen zu verbinden, wobei wenigstens drei der Drahtkabel (14 a - d) zwischen dem einen Ende des Trägers und dem Rahmen angeordnet sind und wenigstens drei der Drahtkabel (14e - h) zwischen dem entgegengesetzten Ende des Trägers und dem Rahmen angeordnet sind.

2. Windkraftanlage nach Anspruch 1, wobei die Verbindung zwischen dem Träger und dem Rahmen ausschließlich mit Hilfe mehrerer Drahtkabel (14a - i) errichtet wird.

3. Windkraftanlage nach Anspruch 1 oder 2, wobei der längliche Träger (9) so angeordnet ist, daß er sich durch die Öffnung in dem Rahmen so erstreckt, daß er von dem Rahmen mit Abstand getrennt ist und ferner in der Weise, daß der längliche Träger (9) auf beiden Seiten des Rahmens übersteht.

4. Windkraftanlage nach einem der vorhergehenden Ansprüche, wobei wenigstens vier der genannten Drahtkabel zwischen dem einen Ende des Trägers und dem Rahmen und wenigstens vier der genannten Drahtkabel zwischen dem entgegengesetzten Ende des Trägers und dem Rahmen angeordnet sind.

5. Windkraftanlage nach einem der vorhergehenden Ansprüche, wobei die Stützelemente (3a - b) eine Ebene bilden und der Träger (9) in Bezug auf diese Ebene in einem Winkel angeordnet ist.

6. Windkraftanlage nach Anspruch 5, wobei der Winkel (α) zwischen dem Träger und der Ebene zwischen 30° - 80°, vorzugsweise 50° - 70° beträgt.

7. Windkraftanlage nach einem der Ansprüche 4 und 5, wobei die Drahtkabel so angeordnet sind, daß die Längen der Drahtkabel einstellbar sind, um dadurch die Einstellung des Winkels (α) zwischen dem Träger (9) und der Ebene, die von den Stützelementen gebildet wird, zu ermöglichen.

8. Windkraftanlage nach Anspruch 7, wobei die Anordnung Verbindungselemente (16) zum Verbinden der Drahtkabel (14a - i) mit dem Rahmen und mit dem Träger aufweist, und daß die Verbindungselemente so angeordnet sind, daß eine Einstellung der Längen der Drahtkabel ermöglicht wird.

9. Windkraftanlage nach einem der vorhergehenden Ansprüche, wobei der Rahmen eine langgestreckte Pontoneinheit (4) aufweist, die zwischen den Tragelementen (3a - b) angeordnet ist.

10. Windkraftanlage nach einem der vorhergehenden Ansprüche, wobei die beiden Stützelemente (3a - b) in einem Abstand voneinander angeordnet sind, und der Rahmen eine Fachwerkstruktur aufweist, die mit den Stützelementen (3a - b) verbunden ist, um die Stützelemente zu verankern.

11. Windkraftanlage nach einem der vorhergehenden Ansprüche, wobei die beiden Stützelemente (3a - b) rohrförmig sind.

## Revendications

1. Centrale éolienne pour transformer de l'énergie éolienne en énergie électrique en mer, comprenant :
- une pluralité de turbines (2) éoliennes,
- une ossature gonflable, comprenant au moins deux éléments (3a-b) de support propres à supporter les turbines éoliennes et agencés de manière à former une ouverture (7) entre les éléments de support et
- un agencement pour relier l'ossature à une fondation mise dans la mer, l'agencement comprenant :
- une poutre (9) oblongue passant dans l'ouverture de l'ossature et faisant saillie des deux côtés de l'ossature,
- une unité (10) de liaison pour relier l'une des extrémités de la poutre à la fondation et
- une pluralité de câbles (14a-i) disposés entre la poutre et l'ossature, afin de relier mécaniquement la poutre à l'ossature,
dans laquelle au moins trois des câbles (14a-d) sont disposés entre une extrémité de la poutre et l'ossature et au moins trois (14e-h) des câbles sont disposés entre l'extrémité opposée de la poutre et l'ossature.

2. Centrale éolienne suivant la revendication 1, dans laquelle la liaison entre la poutre et l'ossature est établie exclusivement au moyen de ladite pluralité de câbles (14a-i).

3. Centrale éolienne suivant la revendication 1 ou 2, dans laquelle la poutre (9) oblongue passe dans l'ouverture de l'ossature, de manière à être à distance de l'ossature et à faire saillie des deux côtés de l'ossature.

4. Centrale éolienne suivant l'une quelconque des revendications précédentes, dans laquelle au moins quatre des câbles sont disposés entre une extrémité de la poutre et l'ossature et au moins quatre de ces câbles sont disposés entre l'extrémité opposée de la poutre et l'ossature.

5. Centrale éolienne suivant l'une quelconque des revendications précédentes, dans laquelle les éléments (3a-b) de support forment un plan et la poutre (9) fait un angle avec ce plan.

6. Centrale éolienne suivant la revendication 5, dans laquelle l'angle (α) entre la poutre et le plan est compris dans l'intervalle de 30° à 80°, de préférence de 50° à 70°.

7. Centrale éolienne suivant l'une quelconque des revendications 4 et 5, dans laquelle les câbles sont disposés de manière à ce que les longueurs des câbles soient réglables pour permettre un réglage de l'angle (α) entre la poutre (9) et le plan formé par les éléments de support.

8. Centrale éolienne suivant la revendication 7, dans laquelle l'agencement comprend des éléments (16) de liaison pour relier les câbles (14a-i) à l'ossature et à la poutre et les éléments de liaison sont agencés pour permettre un réglage des longueurs des câbles.

9. Centrale éolienne suivant l'une quelconque des revendications précédentes, dans laquelle l'ossature comprend une unité (4) oblongue formant ponton disposée entre les éléments (3a-b) de support.

10. Centrale éolienne suivant l'une quelconque des revendications précédentes, dans laquelle les deux éléments (3a-b) de support sont disposés à distance l'un de l'autre et l'ossature comprend une structure en treillis reliée aux éléments (3a-b) de support, afin d'haubaner les éléments de support.

11. Centrale éolienne suivant l'une quelconque des revendications précédentes, dans laquelle les deux éléments (3a-b) de support sont tubulaires.
